# EUROPEAN PATENT SPECIFICATION

(11) **EP 0 869 021 B1**
(45) Date of publication and mention of the grant of the patent: **04.07.2001**
(21) Application number: 96942679.0
(22) Date of filing: 27.12.1996
(51) Int. Cl.: B60K 1/04, B62K 5/04, B62J 39/00

(54) **SELF-PROPELLED VEHICLE**
FAHRZEUG MIT EIGENANTRIEB
VEHICULE AUTOMOTEUR

(30) Priority: 28.12.1995 JP 35475195
(43) Date of publication of application: 07.10.1998
(73) Proprietor: Araki, Tadashi, Tokyo 108 (JP); Ono, Kenji, Urawa-shi, Saitama 336-0013 (JP)
(72) Inventor: ONO, Kenji, Urawa-shi, Saitama 108-0074 (JP)
(74) Representative: Marx, Lothar, Dr.
(86) International application number: JP9603889
(87) International publication number: WO9724237

(56) References cited:
- WO-A-93/01788
- DE-A- 3 128 112
- GB-A- 1 066 691
- JP-A- 1 311 976
- JP-A- 60 249 954
- JP-A- 61 077 563
- JP-U- 4 075 789
- JP-U- 5 082 632
- US-A- 3 738 441
- US-A- 4 750 578

## Description

### TECHNICAL FIELD

The present invention relates to a self-propelled vehicle and, more particularly, to a self-propelled vehicle for an operator to ride and move thereon and for a cargo or a person to be conveyed.

### BACKGROUND ART

In the prior art and in various fields, there have been used a three- or four-wheeled electric self-propelled vehicle for an operator to ride and move thereon while conveying a cargo.

This self-propelled vehicle has been widely employed in the prior art for the caring purpose to convey an aged or partially handicapped person or for an operator to convey a small quantity of cargo in an indoor or outdoor working site or the like.

However, what can be done by this self-propelled vehicle of the prior art is to convey a small quantity of cargo in addition to the operator but not to convey a predetermined amount or more cargo.

On the other hand, the self-propelled vehicle of the prior art can be used only when the operator rides to operate it, but cannot be used as a truck for conveying only a cargo, so that its application is restricted.

US-A-4,750,578 shows a dismantable and collapsible utility cart having a seat for a passenger. The cart can be used to transport a person either in a sit down or stand up position and a cargo must be placed on carrying arms on the front wheeled support. Disadvantageously, this document does not describe a way of transporting more cargo together with a supported passenger.

In US-A-3,738,441 which discloses a vehicle according to the preamble of claim 1, it is proposed to provide guide rails on a lift truck. However, these guide rails may merely be used as a protection for a standing driver, but are not intended to serve as an actual supporting structure for a driver. Furthermore, the vehicle described in US-A-3,738,441 is mainly intended to carry loads, but not a passenger.

Therefore, the invention as set forth in Claim 1 has an object to provide a self-propelled vehicle which is enabled to convey the predetermined quantity of or more cargo and to be used for various applications by making it as a truck for conveying a cargo.

This object is achieved by a vehicle according to claim 1. The subclaims define advantageous embodiments of the invention.

### BRIEF DESCRIPTION OF DRAWINGS

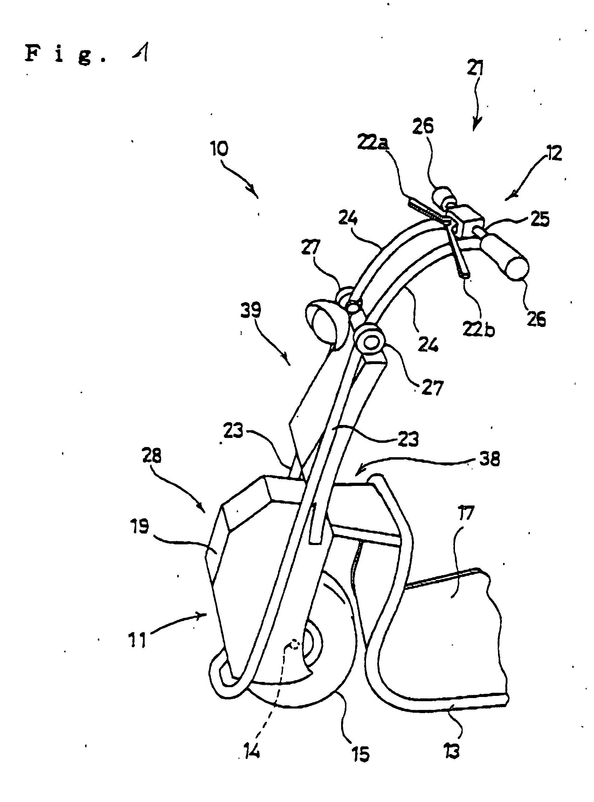

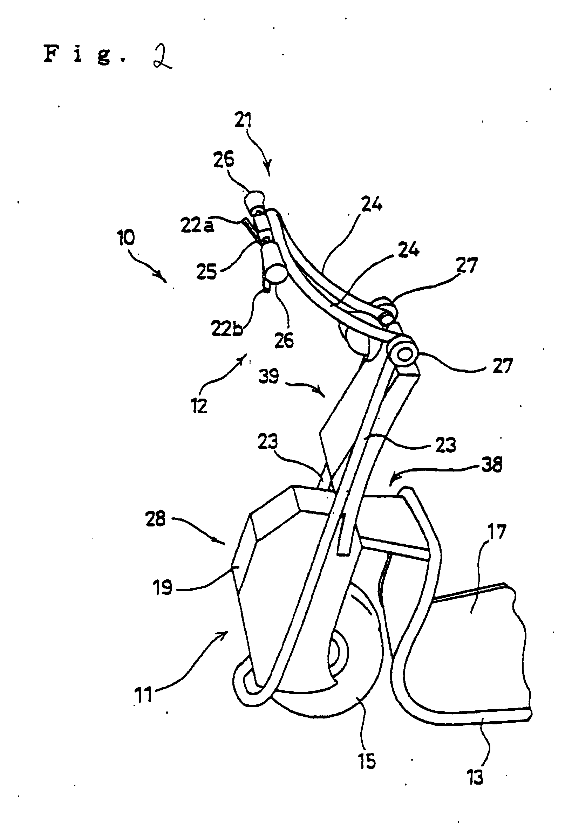

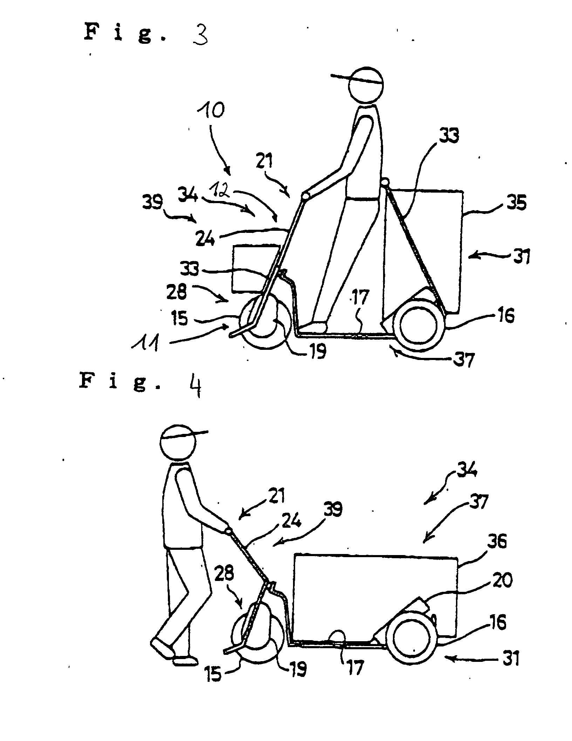

Fig. 1 is a perspective view showing the mode of embodiment of the self-propelled vehicle according to the invention and illustrates a bar handle and a driving portion of a front wheel, namely, the state of the bar handle in the forward run; Fig. 2 is a perspective view showing the mode of embodiment of the self-propelled vehicle according to the invention and illustrates the bar handle and the driving portion of the front wheel, namely, the state of the bar handle in the backward run; Fig. 3 is a schematic diagram showing the mode of embodiment of the self-propelled vehicle according to the invention and illustrates the case in which the self-propelled vehicle is equipped with a supporting bar so that it is driven forward by a standing operator while conveying a cargo; Fig. 4 is a schematic diagram showing the mode of embodiment of the self-propelled vehicle according to the invention and illustrates the case in which the self-propelled vehicle is used as a truck by eliminating the supporting bar so that it is driven backward to convey a cargo by an operator standing on the front end side of the vehicle.

### BEST MODE FOR CARRYING OUT THE INVENTION

The self-propelled vehicle according to the invention will be described on the best mode for carrying out the invention with reference to the accompanying drawings.

As shown in Fig. 1 to 4, a self-propelled vehicle 10 according to the present mode of embodiment is constructed to comprise a driving portion 11 and a steering portion 12 and to be driven to run back and forth to convey a cargo and a person by an operator riding thereon. The self-propelled vehicle 10 is enabled to run backward as a truck when its steering portion 12 is operated by the operator without riding thereon.

Specifically, the self-propelled vehicle 10 according to the present mode of embodiment is formed into a three-wheeled electric car having one front wheel and two rear wheels. The self-propelled vehicle 10 is equipped with a frame 13 made of a pipe, a front wheel 15 arranged at the front end portion of the frame through an axle 14, two rear wheels 16 and 16 arranged at the rear end portion of the frame 13 through an axle 14, a floor panel 17 fixed on the frame 13, and a seat 18 for the operator to seat thereon.

The self-propelled vehicle 10 according to the present mode of embodiment is equipped with a front wheel portion 39 and a truck portion 37. The driving portion 11 and the steering portion 12 are disposed at the front wheel portion 39. This front wheel portion 39 is disposed at the front end portion of the truck portion 37 such that it is made removable from the truck portion 37.

The driving portion 11 is composed of an electric motor 19, which is fixed on the axle 14 of the front wheel, and a battery 20 for supplying an electric power to the electric motor 19 is arranged over the axles 14 of the rear wheels 16 and 16. The battery 20 is given a small capacity in the present mode of embodiment, and two batteries of 6.5 Kg are mounted to provide a far smaller weight than the battery of the prior art having a weight of 30 Kg.

On the other hand, the electric motor 19 can be steplessly changed in its speed by the not-shown control unit. When the operator grips and controls an accelerator lever 22 attached to a bar handle 21, as shown in Fig. 1 and 2, the electric power supply to the electric motor 19 can be suitably changed according to the degree of opening of the accelerator lever 22 thereby to change the running speed freely.

Moreover, the electric motor 19 can be reciprocally activated to run the self-propelled vehicle 10 forward and backward. In this case, the maximum speed is set at 6 Km/h for the forward run and at 4 Km/h for the backward run.

On the other hand, the front wheel portion 39 is equipped with a front wheel suspending portion 38 suspending the front wheel 15, and the bar handle 21 is attached to the upper end portion of the front wheel suspending portion 38. The bar handle 21 is equipped with: handle stems 24 and 24 which are so fixed to the front wheel suspending portion 38 as to be swung to rise and fall in the longitudinal direction; and a handle bar 25 which is fixed generally at a right angle to the end portions of the handle stems 24 and 24. The bar handle 21 is positioned for the forward run at the rear side of the front wheel 15 and for the backward run at the front side of the front wheel 15. Here, reference numerals 23 and 23 designate front frames which are made integral with the bumper.

On the other hand, the bar handle 21 has righthand and lefthand accelerator levers 22a and 22b made integral therewith. These accelerator levers 22a and 22b are fixed at their transverse center portion to the bar handle 21 through the (not-shown) spring member.

At the driving time, therefore, the operator rotates the electric motor 19 forward by gripping not only the grip portions 26 of the bar handle 21 but also the accelerator lever 22a, thereby to generate the driving force in the forward direction. When the lefthand accelerator lever 22b is gripped, the electric motor 19 is reversed to generate the driving force in the backward direction.

On the other hand, the bar handle 21 can be steplessly changed in its angle over the front wheel suspending portion 38 and can be suitably fixed at the set desirable angle.

As shown in Fig. 1 and 2, more specifically, the handle stems 24 and 24 are individually fixed at their lower ends to hinged portions 27 and 27 which are provided at the upper end portion of the front wheel suspending portion 38. The handle stems 24 and 24 can be vertically turned to rise and fall longitudinally by about 180 degrees on the hinged portions 27 and 27.

Moreover, these hinged portions 27 can be fixed at a desired angle by the single action using the (not-shown) suitable means.

For the forward run of the self-propelled vehicle 10 according to the present mode of embodiment, therefore, the bar handle 21 can be suitably fallen toward the rear wheels 16 and 16, as shown in Figs. 1 and 2. Then, the operator can easily grip the bar handle 21 to steer and drive the vehicle.

For the backward run, on the other hand, the bar handle 21 is turned by a predetermined angle to fall down to the front side of the self-propelled vehicle 10 by the operator, as shown in Fig. 2. In this case, the bar handle 21 is positioned in front of the front wheel 15 so that the operator 30 can operate the bar handle 21 from the side of the front end portion 28 to the back of the self-propelled vehicle 10 thereby to employ the self-propelled vehicle 10 as a truck.

In this case, the present mode of embodiment is constructed to be self-propelled for the backward run at a speed (e.g., 4 Km/h) substantially equal to the humane walking speed, as described hereinbefore. At this backward run, the operator does not ride on the self-propelled vehicle 10 but grips the bar handle 21 on the side of the front end portion 28 and operates the self-propelled vehicle 10 toward the rear end portion 31 of the vehicle 10. Then, the operator can walk while operating the self-propelled vehicle 10 in conformity to the speed of the vehicle 10.

When the self-propelled vehicle 10 is to be turned to the right or left, on the other hand, the operator can turn the bar handle 21 to the right or left. In the present mode of embodiment, moreover, the self-propelled vehicle is formed into the three-wheeled vehicle and is equipped with the electric motor 19 at its front wheel 15, as described hereinbefore, so that it is constructed into the so-called "front wheel drive". Even when the front wheel 15 is directed generally at a right angle in the forward direction, for example, the self-propelled vehicle is driven at its front wheel 15 so that it can turn its direction at the position on the rear wheels 16.

When the self-propelled vehicle 10 is to be stopped, on the other hand, the accelerator lever 22a is released from its gripped state. Then, the driving force is not applied to the front wheel 15 so that the self-propelled vehicle 10 runs a predetermined distance before it is naturally stopped. Here, the self-propelled vehicle 10 according to the present mode of embodiment is completely stopped at a distance of about 1 m when the accelerator lever 22a is released while the vehicle is running at 6 Km/h.

When the self-propelled vehicle 10 according to the present mode of embodiment is to be used as the truck, the operator 30 brings the bar handle 21 down by a predetermined angle to the front of the vehicle, as shown in Fig. 2. Then, the bar handle 21 is positioned in front of the front wheel 15 so that the operator 30 is enabled to use the self-propelled vehicle 10 as the truck by operating the bar handle 21 from the side of the front end portion 28 of the self-propelled vehicle 10.

In this case, the bar handle 21 is positioned far in front of the front wheel 15 of the self-propelled vehicle 10. This positioning prevents the feet of the operator 30 from being obstructed for the conveying operation by the front wheel 15, when the operator 30 gets off the self-propelled vehicle 10, goes to the front of the front wheel 15 and grips the bar handle 21 for the backward run while facing the rear end portion 31 of the self-propelled vehicle 10.

When the self-propelled vehicle 10 is driven backward so that it may be used as the truck, the lefthand accelerator lever 22b of the bar handle 21 can be gripped to apply the driving force to the front wheel 15 so that the self-propelled vehicle 10 can run back to the rear end portion 31. According to the invention a removable supporting bar 33 is provided to extend obliquely upward from the rear end portion of the frame 13 to the side of the front end portion 28 of the self-propelled vehicle, as shown in Fig. 3.

When the self-propelled vehicle 34 thus constructed is to be operated, the operator 30 drives it while standing on the floor panel 17 with his waist against the supporting bar 33.

With this construction, a large cargo 35 can be conveyed on the space which is otherwise occupied by the seat 18. According to the present mode of embodiment, moreover, the supporting bar 33 can be removed for the backward run, as shown in Fig. 4, so that a large-sized cargo 36 can be conveyed by making use of the substantially entire area of the floor panel 17.

As a result, the self-propelled vehicle 34 according to the present mode of embodiment can convey the more massive cargo 36.

Here, the foregoing mode of embodiment has been described in connection with the case in which the vehicle is equipped with the three wheels. However, the invention should not be limited to the mode of embodiment but can be embodied by four wheels. Moreover, the invention has been described in connection with the case of the front-wheel drive, but the driving type should not be limited to the aforementioned mode of embodiment.

In the aforementioned mode of embodiment, moreover, the invention has been described in connection with the case in which the bar handle 21 is turned to rise and fall to the reverse direction. However, the invention should not be limited to the foregoing mode of embodiment but may be modified such that the front wheel suspending portion 38 is positioned upright and such that the bar handle 21 is turned horizontally back and forth on the front wheel suspending portion 38.

On the other hand, the description thus far made is directed to the case in which the driving portion is constructed of the electric motor 19. However, the type of the driving portion should not be limited to that of the foregoing mode of embodiment but can employ an internal combustion engine.

On the other hand, there has been described the case in which the steering portion 12 is constructed of the bar handle 21. However, the steering portion 12 should not be limited to that of the foregoing mode of embodiment but may be constructed of a steering wheel.

On the other hand, the battery 20 of the present mode of embodiment employs two units of 6.5 Kg, which are lighter than the battery of 30 Kg of the prior art. This allows the frame 13 to have a strength sufficient for supporting the battery 20. In the prior art in which the battery of 30 Kg is mounted, the frame 13, the front wheel 15 and the rear wheels 16 have to be given a predetermined strength so that their total weight is as large as 80 Kg. The self-propelled vehicle 10 or 34 according to the present mode of embodiment has a total weight of 55 Kg, which is cut by 25 Kg from the total weight of the prior art. This weight cut provides an effect that the self-propelled vehicle 10 or 34 can be easily handled when it is mounted on an automobile.

In the self-propelled vehicle 10 or 34 according to the present mode of embodiment, on the other hand, the front wheel portion 39 is removably attached to the truck portion 37. This makes it possible to remove the front wheel portion 39 from the truck portion 37 and to transport them separately thereby to provide a self-propelled vehicle having an excellent transportability.

Since the front wheel portion 39 removed has the driving portion 11, on the other hand, it can be attached to the existing wheeled chair, for example, so that the wheeled chair can also be used as a self-propelled vehicle.

## Claims

1. A self-propelled vehicle (10) comprising a driving portion (11) and a steering portion (12) so that it can be driven to run forward and backward to convey cargoes and a passenger and can be operated by an operator riding thereon, wherein the self-propelled vehicle (10) can be used for the backward run as a truck by operating it by the operator not riding thereon characterized in that it further comprises a removable supporting bar (33) for supporting from the back the operator riding in a standing position.

2. A self-propelled vehicle (10) as set forth in Claim 1, further comprising a front wheel portion (39) and a truck portion (37), wherein the driving portion (11) and the steering portion (12) are disposed at the front wheel portion (39), and in that the front wheel portion (39) is disposed at the front end portion of the truck portion (37).

3. A self-propelled vehicle (10) as set forth in Claim 2, wherein the front wheel portion (39) is made removable with respect to the truck portion (37).

4. A self-propelled vehicle (10) as set forth in Claim 1 or 2, wherein the steering portion (12) is equipped with a bar handle (21).

5. A self-propelled vehicle (10) as set forth in Claim 4, wherein the bar handle (21) may be reversely turned toward the front wheel (15).

6. A self-propelled vehicle as set forth in Claim 5, wherein the bar handle (21) includes: handle stems (24) arranged at the upper end of a front wheel suspending portion (38) and so fixed to the front wheel suspending portion (38) as to be turned to rise and fall longitudinally of the self-propelled vehicle (10); and a handle bar (25) fixed to the end portions of the handle stems (24) generally at a right angle with respect to the handle stems (24), and in that the bar handle (21) is arranged for the forward run on the back side of the front wheel (15) and for the backward run far in front of the front wheel (15).

7. A self-propelled vehicle (10) as set forth in Claims 1 to 6, wherein the self-propelled vehicle is self-propelled at a speed substantially equal to the human walking speed.

8. A self-propelled vehicle (10) as set forth in Claim 1, wherein the driving portion is composed of an electric motor (19), and in that a power supply to be supplied to the driving portion (11) is formed to have a small capacity.

9. A self-propelled vehicle (10) as set forth in Claim 1, further comprising one front wheel (15) at its front end portion and two rear wheels (16) at its rear end portion, wherein the driving portion (11) can drive the front wheel (15.)

## Revendications

1. Véhicule autopropulsé (10) comprenant une partie entraînement (11) et une partie direction (12), de telle sorte qu'il puisse être dirigé pour rouler vers l'avant et vers l'arrière pour transporter des marchandises et un passager et puisse être actionné par un opérateur voyageant sur celui-ci, dans lequel le véhicule autopropulsé (10) peut être utilisé pour la marche arrière comme un camion en le faisant fonctionner alors que l'opérateur ne voyage pas sur celui-ci, caractérisé en ce que qu'il comprend en plus une barre de support amovible (33) pour supporter par l'arrière l'opérateur voyageant en position debout.

2. Véhicule autopropulsé (10) suivant la revendication 1, comprenant en outre une partie avec roue avant (39) et une partie camion (37), dans lequel la partie entraînement (11) et la partie direction (12) sont disposées sur la partie avec roue avant (39) et dans lequel la partie avec roue avant (39) est disposée à l'extrémité avant de la partie camion (37).

3. Véhicule autopropulsé (10) suivant la revendication 2, dans lequel la partie avec roue avant (39) est rendue amovible par rapport à la partie camion (37).

4. Véhicule autopropulsé (10) suivant la revendication 1 ou 2, dans lequel la partie direction (12) est équipée d'un guidon (21).

5. Véhicule autopropulsé (10) suivant la revendication 4, dans lequel le guidon (21) peut être retourné vers la roue avant (15).

6. Véhicule autopropulsé (10). suivant la revendication 5, dans lequel le guidon (21) comprend: des potences de guidon (24) disposées à l'extrémité supérieure d'une partie de suspension de la roue avant (38) et fixées à la partie de suspension de la roue avant (38) de façon à être tournées pour s'élever et retomber longitudinalement par rapport au véhicule autopropulsé (10) ; et une poignée de guidon (25) fixée aux extrémités des potences de guidon (24) essentiellement à angle droit avec les potences de guidon (24) et dans lequel le guidon (21) est disposé pour la marche avant à l'arrière de la roue avant (15) et pour la marche arrière bien en avant de la roue avant (15).

7. Véhicule autopropulsé (10) suivant les revendications 1 à 6, dans lequel le véhicule autopropulsé est autopropulsé à une vitesse essentiellement égale à la vitesse d'un homme au pas.

8. Véhicule autopropulsé (10) suivant la revendication 1, dans lequel la partie entraînement (11) est composée d'un moteur électrique (19) et dans lequel une alimentation pour la partie entraînement (11) est formée de façon à avoir une petite capacité.

9. Véhicule autopropulsé (10) suivant la revendication 1, comprenant en outre une roue avant (15) à sa partie avant et deux roues arrières (16) à sa partie arrière, dans lequel la partie entraînement (11) peut entraîner la roue avant (15).

## Patentansprüche

1. Fahrzeug (10) mit Eigenantrieb mit einem Antriebsabschnitt (11) und einem Lenkabschnitt (12), so dass es zur Vorwärts- und Rückwärtsbewegung angetrieben werden kann, um Ladung und einen Passagier zu transportieren, und durch einen Fahrer gefahren werden kann, der darauf sitzt, wobei das Fahrzeug (10) mit Eigenantrieb bei der Rückwärtsfahrt als Transportfahrzeug verwendet werden kann, indem es durch den Fahren gefahren wird, der nicht darauf sitzt, dadurch gekennzeichnet, dass es ferner eine entfernbare Stützstange (33) umfasst, um den Fahrer von hinten zu stützen, der in einer stehenden Position fährt.

2. Fahrzeug (10) mit Eigenantrieb nach Anspruch 1, das ferner einen Vorderradabschnitt (39) und einen Transportabschnitt (37) umfasst, wobei der Antriebsabschnitt (11) und der Lenkabschnitt (12) am Vorderradabschnitt (39) angeordnet sind, und wobei der Vorderradabschnitt (39) am vorderen Abschnitt des Transportabschnittes (37) angeordnet ist.

3. Fahrzeug (10) mit Eigenantrieb nach Anspruch 2, bei dem der Vorderradabschnitt (39) hinsichtlich des Transportabschnittes (37) entfernbar ausgebildet ist.

4. Fahrzeug (10) mit Eigenantrieb nach Anspruch 1 oder 2, bei dem der Steuerabschnitt (12) mit einer Lenkstangenvorrichtung ausgestattet ist.

5. Fahrzeug (10) mit Eigenantrieb nach Anspruch 4, bei dem die Lenkstangenvorrichtung (21) zum Vorderrad (15) hin umgedreht werden kann.

6. Fahrzeug mit Eigenantrieb nach Anspruch 5, bei dem die Lenkstangenvorrichtung (21) umfasst: Lenksäulen (24), die am oberen Ende eines Vorderrad-Aufhängungsabschnittes (38) angeordnet und so an dem Vorderrad-Aufhängeabschnitt (38) befestigt sind, dass sie gedreht werden können, um sich längs des Fahrzeugs (10) mit Eigenantrieb anzuheben oder abzufallen, und eine Lenkstange (25), die an den Endabschnitten der Lenksäulen (24) im Allgemeinen im rechten Winkel zu den Lenksäulen (24) befestigt ist, und wobei die Lenkstangenvorrichtung (21) für den Vorwärtsgang auf der Rückseite des Vorderrades (15) und für den Rückwärtsgang weit vor dem Vorderrad (15) angeordnet ist.

7. Fahrzeug (10) mit Eigenantrieb nach den Ansprüchen 1 bis 6, bei dem das Fahrzeug mit Eigenantrieb mit einer Geschwindigkeit selbst angetrieben wird, die im Wesentlichen der menschlichen Schrittgeschwindigkeit entspricht.

8. Fahrzeug (10) mit Eigenantrieb nach Anspruch 1, bei dem der Antriebsabschnitt aufgebaut ist aus einem Elektromotor (19), und bei dem die Energieversorgung für den Antriebsabschnitt (11) so ausgebildet ist, dass sie eine geringe Kapazität aufweist.

9. Fahrzeug (10) mit Eigenantrieb nach Anspruch 1, das ferner ein Vorderrad (15) an seinem vorderen Endabschnitt und zwei Hinterräder (14) an seinem hinteren Endabschnitt aufweist, wobei der Antriebsabschnitt (11) das Vorderrad (15) antreiben kann.
